# EUROPEAN PATENT SPECIFICATION

(11) **EP 4 418 137 B1**
(45) Date of publication and mention of the grant of the patent: **01.07.2026**
(21) Application number: 24156007.7
(22) Date of filing: 06.02.2024
(51) Int. Cl.: G06F 16/11, G06F 16/185

(54) **DATA STORAGE METHOD AND APPARATUS, ELECTRONIC DEVICE, AND STORAGE MEDIUM**
DATENSPEICHERUNGSVERFAHREN UND -VORRICHTUNG, ELEKTRONISCHE VORRICHTUNG UND SPEICHERMEDIUM
PROCÉDÉ ET APPAREIL DE STOCKAGE DE DONNÉES, DISPOSITIF ÉLECTRONIQUE ET SUPPORT DE STOCKAGE

(30) Priority: 15.02.2023 CN 202310163239
(43) Date of publication of application: 21.08.2024
(73) Proprietor: Beijing Volcano Engine Technology Co., Ltd., Beijing 100190 (CN); Lemon Inc., Grand Cayman, KY1-1205 (KY)
(72) Inventor: XIE, Kai, 018960 Singapore (SG); QIAN, Han, Beijing, 100028 (CN)
(74) Representative: Marks & Clerk LLP

(56) References cited:
- US-A1- 2017 060 918
- US-A1- 2022 138 151

## Description

### CROSS-REFERENCE TO RELATED APPLICATION

The present application claims priority of the Chinese Patent Application No. 202310163239.X, filed on February 15, 2023.

### TECHNICAL FIELD

Embodiments of the present disclosure relate to a data storage method and apparatus, an electronic device, and a storage medium.

### BACKGROUND

With the development of artificial intelligence technology, machine learning has an increasing demand for training data. In order to facilitate the management of large batches of data, storage systems are usually used to store data. For example, usage behavior data of users during use of the application is stored for subsequent use.

Current data storage systems usually adopt a copy-on-write method to add new data to the storage system. However, this method requires the data already stored in the storage system to be read out, merged with the new data, and then rewritten into the storage system, which results in greater overhead of data reading and writing, and thus affects the data storage efficiency.

Reference D1 (US 2017/060918 A1) discloses an automated intelligent provisioning of data storage resources in response to user requests in a data storage management system.

### SUMMARY

The invention is as defined in the accompanying claims. It is an object of the present invention to provide a data storage method and apparatus, an electronic device, and a storage medium. The object is achieved by the
features of the respective independent claims. Further embodiments are defined in the respective dependent claims. The embodiments of the present disclosure are capable of improving data storage efficiency.

The embodiments of the present disclosure provide a data storage method, including:
acquiring, in response to a file storage request for a first target data file, the first target data file to be stored in a target storage system, in which the first target data file includes at least one feature data, the target storage system is configured with table metadata, the table metadata is used to indicate storage branch information corresponding to the target storage system, the storage branch information includes a trunk branch and at least one experimental branch, the trunk branch is used to mount a data file that has been used for model training and a training result of the data file meets a preset requirement, the at least one experimental branch is used to mount a data file that has not been used for model training, the trunk branch and the at least one experimental branch are isolated from each other, and the file storage request carries first target branch information;
determining, based on the table metadata, a first target experimental branch that matches the first target branch information carried by the file storage request from the at least one experimental branch, and newly creating a first target snapshot corresponding to the first target experimental branch, in which the first target snapshot is used to indicate a target storage path of the first target data file in the target storage system;
storing, according to the target storage path indicated by the first target snapshot, the first target data file to a corresponding storage location in the target storage system, in which the first target data file is isolated from data files corresponding to other experimental branches and the trunk branch in the target storage system;
   the data storage method further comprises: training a target model based on the first target data file to obtain a training result of the first target data file, and determining whether the training result of the first target data file meets the preset requirement; and in a case where the training result of the first target data file meets the preset requirement, newly creating a second target snapshot corresponding to the trunk branch, and establishing a corresponding indication relationship between the second target snapshot and the first target data file as well as a pre-existing data file corresponding to the trunk branch.

In the embodiments of the present disclosure, the storage architecture of the target storage system is implemented through the trunk branch and at least one experimental branch, in which the trunk branch is used to mount a data file that has been used for model training and a training result of the data file meets a preset requirement, and the experimental branch is used to mount a data file that has not been used for model training; when adding a new data file to the target storage system, the new data file may be added through one of the at least one experimental branch; compared with the copy-on-write storage method, the new data file is isolated from data files corresponding to other branches in the target storage system, and there is no need to copy and read the data in other branches; in this way, the overhead of data processing can be reduced, which is further beneficial to improving the data storage efficiency.

In a possible embodiment, the first target snapshot corresponds to a target file detail, and the target file detail includes the target storage path allocated for the first target data file in the target storage system; and the storing, according to the target storage path indicated by the first target snapshot, the first target data file to the corresponding storage location in the target storage system, includes:
storing, according to the target storage path comprised in the target file detail corresponding to the first target snapshot, the first target data file to a storage location corresponding to the target storage path.

In the embodiments of the present disclosure, because the target file detail includes the target storage path allocated for the first target data file in the target storage system, the accuracy of the storage of the first target data file may be improved according to the target storage path included in the target file detail.

In the embodiments of the present disclosure, in the case where the training result meets the preset requirement, the corresponding indication relationship between the second target snapshot and the first target data file as well as the pre-existing data file corresponding to the trunk branch is established; in this way, it can be ensured that the data files corresponding to the trunk branch are all beneficial for model training, which is further beneficial to improving the quality of the data files corresponding to the trunk branch.

In a possible embodiment, establishing the corresponding indication relationship between the second target snapshot and the first target data file as well as the pre-existing data file corresponding to the trunk branch, includes:
determining whether there is conflicting feature data between the first target data file and the pre-existing data file corresponding to the trunk branch;
in a case where there is no conflicting feature data between the first target data file and the pre-existing data file corresponding to the trunk branch, establishing the corresponding indication relationship between the second target snapshot and the first target data file as well as the pre-existing data file corresponding to the trunk branch.

In the embodiments of the present disclosure, in the case where there is no conflicting feature data between the first target data file and the pre-existing data file corresponding to the trunk branch, the corresponding indication relationship between the second target snapshot and the first target data file as well as the pre-existing data file corresponding to the trunk branch is established; in this way, the feature data conflict in the data file corresponding to the trunk branch may be avoided, thereby improving the quality of data storage. In addition, during the subsequent process of merge-on-read, the conflict in data merging is avoided, thus not affecting the efficiency of data reading.

In a possible embodiment, in a case where the at least one feature data in the first target data file is data obtained by changing feature data in a data file corresponding to the trunk branch based on a preset change logic, the data storage method further includes:
in a case where the data file corresponding to the trunk branch is changed, obtaining a changed first target data file based on a latest changed data file corresponding to the trunk branch and the preset change logic;
newly creating a third target snapshot corresponding to the first target experimental branch, and establishing a corresponding indication relationship between the third target snapshot and the changed first target data file.

In the embodiments of the present disclosure, in the case where the feature data in the first target data file is data obtained by changing feature data in the data file corresponding to the trunk branch based on the preset change logic, if the data file corresponding to the trunk branch is changed, the data file corresponding to the first target experimental branch may be updated at the same time; in this way, it can be ensured that the feature data executed by the data file corresponding to the first target experimental branch is the latest; in this way, in the subsequent feature data research based on the first target experimental branch, it can be ensured the timeliness of the feature data, thereby improving the accuracy of feature data research.

In a possible embodiment, the data storage method further includes:
for each snapshot, determining whether a retention duration of each snapshot exceeds a preset duration;
deleting a snapshot in a case where a retention duration of the snapshot exceeds the preset duration and the snapshot is not connected by any branch.

In the embodiments of the present disclosure, in the case where the retention duration of the snapshot exceeds the preset duration and the snapshot is not connected by any branch, it means that the snapshot is not used. Therefore, the snapshot may be deleted from the table metadata. In this way, the simplicity of the table metadata may be improved, which may save searching time when performing branch searches based on the table metadata, thus improving the efficiency of branch determination.

In a possible embodiment, the data storage method further includes:
for each branch, in a case where there is a file detail on the branch that does not have a corresponding relationship with any snapshot, deleting the file detail that does not have a corresponding relationship from the table metadata; and/or
for each branch, in a case where there is a data file on the branch that does not have a corresponding indication relationship with any snapshot, deleting the data file that does not have a corresponding indication relationship.

In the embodiments of the present disclosure, the file detail that does not have the corresponding relationship in the table metadata may also be deleted, which may simplify the content of the table metadata, and save searching time when performing branch searches based on the table metadata, thus improving the efficiency of branch determination; and deleting the data file that does not have the corresponding indication relationship may increase the effective storage space of the target storage system.

In a possible embodiment, the data storage method further includes:
determining, in response to a file read request, a second target experimental branch from the table metadata based on second target branch information carried by the file read request, and determining, from a data file corresponding to the second target experimental branch, at least one second target data file that matches the second target branch information carried by the file read request;
performing a merge-on-read operation on the at least one second target data file to obtain a merged data file, and reading feature data based on the merged data file.

In the embodiments of the present disclosure, when reading a data file, it may be read through an experimental branch. In this way, the read isolation of feature data mays be achieved, that is, there is no need to read unnecessary data. In this way, the overhead of data reading may be reduced, which is beneficial to improving the efficiency of data reading.

In a possible embodiment, feature data in the data file further has identification information, and performing the merge-on-read operation on the at least one second target data file to obtain the merged data file, comprises:
merging, according to identification information of respective feature data in the at least one second target data file, feature data having the same identification information to obtain the merged data file.

In the embodiments of the present disclosure, some feature data are merged based on the identification information of respective feature data; in this way, the accuracy of data merging may be improved.

The embodiments of the present disclosure further provide a data storage apparatus, including:
a data acquisition module, which is configured to acquire, in response to a file storage request for a first target data file, the first target data file to be stored in a target storage system, in which the first target data file includes at least one feature data, the target storage system is configured with table metadata, the table metadata is used to indicate storage branch information corresponding to the target storage system, the storage branch information includes a trunk branch and at least one experimental branch, the trunk branch is used to mount a data file that has been used for model training and a training result of the data file meets a preset requirement, the at least one experimental branch is used to mount a data file that has not been used for model training, the trunk branch and the at least one experimental branch are isolated from each other, and the file storage request carries first target branch information;
a branch determination module, which is configured to determine, based on the table metadata, a first target experimental branch that matches the first target branch information carried by the file storage request from the at least one experimental branch, and newly create a first target snapshot corresponding to the first target experimental branch, in which the first target snapshot is used to indicate a target storage path of the first target data file in the target storage system;
a data storage module, which is configured to store, according to the target storage path indicated by the first target snapshot, the first target data file to a corresponding storage location in the target storage system, in which the first target data file is isolated from data files corresponding to other experimental branches and the trunk branch in the target storage system;
   the data storage apparatus further comprises a relationship determination module, and the relationship determination module is configured to: train a target model based on the first target data file to obtain a training result of the first target data file, and determine whether the training result of the first target data file meets the preset requirement; and in a case where the training result of the first target data file meets the preset requirement, newly create a second target snapshot corresponding to the trunk branch, and establish a corresponding indication relationship between the second target snapshot and the first target data file as well as a pre-existing data file corresponding to the trunk branch.

**In** a possible embodiment, the first target snapshot corresponds to a target file detail, and the target file detail includes the target storage path allocated for the first target data file in the target storage system; and the data storage module is specifically configured to:
store, according to the target storage path included in the target file detail corresponding to the first target snapshot, the first target data file to a storage location corresponding to the target storage path.

In a possible embodiment, the relationship determination module is specifically configured to:
determine whether there is conflicting feature data between the first target data file and the pre-existing data file corresponding to the trunk branch;
in a case where there is no conflicting feature data between the first target data file and the pre-existing data file corresponding to the trunk branch, establish the corresponding indication relationship between the second target snapshot and the first target data file as well as the pre-existing data file corresponding to the trunk branch.

In a possible embodiment, the relationship determination module is further configured to:
in a case where the at least one feature data in the first target data file is data obtained by changing feature data in a data file corresponding to the trunk branch based on a preset change logic, and in a case where the data file corresponding to the trunk branch is changed, obtain a changed first target data file based on the latest changed data file corresponding to the trunk branch and the preset change logic;
newly create a third target snapshot corresponding to the first target experimental branch, and establish a corresponding indication relationship between the third target snapshot and the changed first target data file.

In a possible embodiment, the data storage apparatus further includes an information deletion module, and the information deletion module is configured to:
for each snapshot, determine whether a retention duration of each snapshot exceeds a preset duration;
delete a snapshot in a case where a retention duration of the snapshot exceeds the preset duration and the snapshot is not connected by any branch.

In a possible embodiment, the information deletion module is further configured to:
for each branch, in a case where there is a file detail on the branch that does not have a corresponding relationship with any snapshot, delete the file detail that does not have a corresponding relationship from the table metadata; and/or
for each branch, in a case where there is a data file on the branch that does not have a corresponding indication relationship with any snapshot, delete the data file that does not have a corresponding indication relationship.

In a possible embodiment, the data storage apparatus further includes a data reading module,
the branch determination module is further configured to:
determine, in response to a file read request, a second target experimental branch from the table metadata based on second target branch information carried by the file read request, and determine, from a data file corresponding to the second target experimental branch, at least one second target data file that matches the second target branch information carried by the file read request;
the data reading module is further configured to:
   perform a merge-on-read operation on the at least one second target data file to obtain a merged data file, and read feature data based on the merged data file.

The embodiments of the present disclosure further provide an electronic device, including a processor, a memory and a bus; the memory stores machine-readable instructions executable by the processor, and when the electronic device is running, the processor and the memory communicate with each other through the bus; and when the machine-readable instructions are executed by the processor, the data storage method in any one of the above-mentioned embodiments is implemented.

The embodiments of the present disclosure further provide a computer-readable storage medium, the computer-readable storage medium stores a computer program, and when the computer program is run by a processor, the data storage method in any one of the above-mentioned embodiments is implemented.

In order to make the above-mentioned objects, features and advantages of the present disclosure more obvious and understandable, preferred embodiments are given below and described in detail with reference to the drawings.

### BRIEF DESCRIPTION OF DRAWINGS

To explain the technical solutions of the embodiments of the present disclosure more clearly, the drawings required to be used in the embodiments will be briefly introduced below. The drawings here are incorporated into the specification and constitute a part of this specification. These drawings illustrate embodiments consistent with the present disclosure and, together with the specification, explain the technical solutions of the present disclosure. It should be understood that the following drawings only illustrate certain embodiments of the present disclosure, and therefore should not be regarded as limiting the scope. For those of ordinary skill in the art, without exerting creative efforts, other relevant drawings may also be obtained based on these drawings.
FIG. 1 illustrates a flowchart of a data storage method provided by some embodiments of the present disclosure;
FIG. 2 illustrates a schematic diagram of a storage architecture of a target storage system provided by some embodiments of the present disclosure;
FIG. 3 illustrates a flowchart of a method for establishing a corresponding indication relationship between a first target data file and a trunk branch provided by some embodiments of the present disclosure;
FIG. 4 illustrates a schematic diagram of newly creating a second target snapshot corresponding to the trunk branch provided by some embodiments of the present disclosure;
FIG. 5 illustrates a schematic diagram of newly creating a new snapshot corresponding to an experimental branch provided by some embodiments of the present disclosure;
FIG. 6 illustrates a flowchart of a data reading method provided by some embodiments of the present disclosure;
FIG. 7 illustrates a schematic diagram of a structure of a data storage apparatus provided by some embodiments of the present disclosure;
FIG. 8 illustrates a schematic diagram of a structure of another data storage apparatus provided by some embodiments of the present disclosure; and
FIG. 9 illustrates a schematic diagram of an electronic device provided by some embodiments of the present disclosure.

### DETAILED DESCRIPTION

In order to make the objects, technical solutions and advantages of the embodiments of the present disclosure clearer, the technical solutions of the embodiments of the present disclosure will be described clearly and completely below with reference to the drawings in the embodiments of the present disclosure. Obviously, the described embodiments are only part of the embodiments of the present disclosure, but not all embodiments. Therefore, the following detailed description of the embodiments of the present disclosure provided in the drawings is not intended to limit the protection scope of the present disclosure, but rather to represent selected embodiments of the present disclosure. Based on the embodiments of the present disclosure, all other embodiments obtained by those skilled in the art without any creative efforts shall fall within the protection scope of the present disclosure.

It should be noted that similar reference numerals and letters represent similar items in the following drawings, therefore, once an item is defined in one drawing, it does not need to be further defined and explained in subsequent drawings.

The term "and/or" in the present disclosure only describes a correlation relationship, indicating that three relationships may exist. For example, A and/or B may mean: A exists alone, A and B exist simultaneously, and B exists alone. In addition, the term "at least one" herein means any one of a plurality or any combination of at least two of a plurality, for example, including at least one of A, B, and C may mean including any one or more elements selected from the set consisting of A, B, and C.

Research has found that current data storage systems usually adopt a copy-on-write method to add new data to a storage system. However, this method requires the data already stored in the storage system to be read out, merged with the new data, and then rewritten into the storage system, which results in greater overhead of data reading and writing, and thus makes the data storage efficiency lower.

Based on the above research, the embodiments of the present disclosure provide a data storage method, including: first acquiring, in response to a file storage request for a first target data file, the first target data file to be stored in a target storage system, in which the first target data file includes at least one feature data, the target storage system is configured with table metadata, the table metadata is used to indicate storage branch information corresponding to the target storage system, the storage branch information includes a trunk branch and at least one experimental branch, the trunk branch is used to mount a data file that has been used for model training and a training result of the data file meets a preset requirement, the experimental branch is used to mount a data file that has not been used for model training, and the file storage request carries target branch information; then determining, based on the table metadata, a first target experimental branch corresponding to the file storage request from the at least one experimental branch, and newly creating a first target snapshot corresponding to the first target experimental branch, in which the first target snapshot is used to indicate a target storage path of the first target data file in the target storage system; and finally storing, based on the first target snapshot, the first target data file to a corresponding storage location in the target storage system. In this way, the first target data file can be written to the system based on the experimental branch, without affecting the data file mounted on the trunk branch, and compared with the copy-on-write method, there is no need to operate the data file mounted on the trunk branch, so that the data storage efficiency may be improved.

In order to facilitate understanding of the embodiments of the present disclosure, first, the execution subject of the data storage method provided by the embodiments of the present disclosure is introduced in detail. The execution subject of the data storage method provided by the embodiments of the present disclosure is an electronic device. In this embodiment, the electronic device is a server. The server may be an independent physical server, a server cluster or distributed system composed of a plurality of physical servers, or a cloud server providing basic cloud computing services such as cloud services, cloud databases, cloud computing, cloud storage, big data and artificial intelligence platforms. In other embodiments, the electronic device may also be a terminal device. The terminal device may be a mobile device, a user terminal, a handheld device, a computing device, a wearable device, etc. In addition, the data storage method may also be implemented by a processor calling computer-readable instructions stored in a memory.

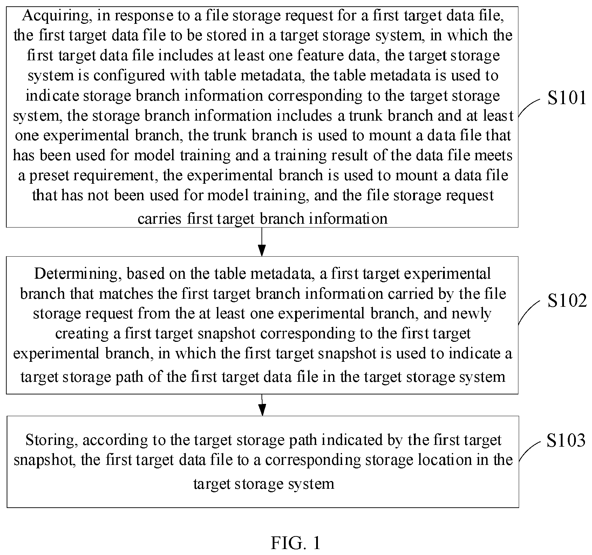

The data storage method provided by the embodiments of the present disclosure is described in detail below with reference to the drawings. Referring to FIG. 1, which is a flowchart of a data storage method provided by the embodiments of the present disclosure, the data storage method includes the following steps S101~S103.

S101: acquiring, in response to a file storage request for a first target data file, the first target data file to be stored in a target storage system, in which the first target data file includes at least one feature data, the target storage system is configured with table metadata, the table metadata is used to indicate storage branch information corresponding to the target storage system, the storage branch information includes a trunk branch and at least one experimental branch, the trunk branch is used to mount a data file that has been used for model training and a training result of the data file meets a preset requirement, the experimental branch is used to mount a data file that has not been used for model training, and the file storage request carries first target branch information.

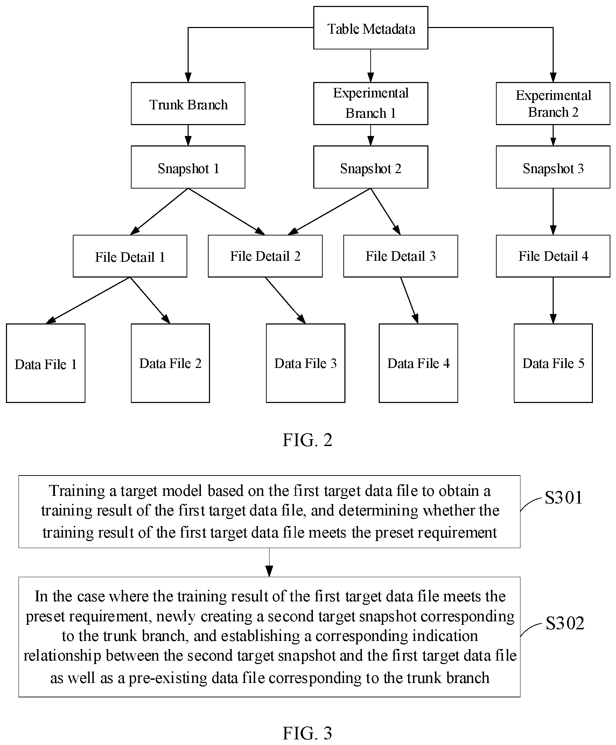

First, the storage architecture of the target storage system is introduced. Specifically, the target storage system relies on the metadata architecture to implement the storage of data files. Please refer to FIG. 2, which is a schematic diagram of a storage architecture of a target storage system provided by the embodiments of the present disclosure. As illustrated in FIG. 2, the target storage system is configured with table metadata, and the table metadata includes storage branch information corresponding to the target storage system; the storage branch information includes a trunk branch and at least one experimental branch (or research branch), such as an experimental branch 1 and an experimental branch 2 illustrated in FIG. 2; the trunk branch is used to mount a data file that has been used for model training and the training result of the data file meets a preset requirement (such as data files 1, 2, and 3), and the experimental branch is used to mount a data file that has not been used for model training (such as data file 5); it should be understood that model training is performed on the target model based on the data file to obtain a training result, and if the training result meets the preset requirement, the data file is mounted on the trunk branch, and for some data files (such as new files), they may be mounted on the experimental branch.

The file storage request carries the first target branch information, and the first target branch information is the identification information of one experimental branch (for example, the identification information of experimental branch 1 may be A1, and the identification information of experimental branch 2 may be A2, which may also be identification information in other formats and is not limited), which is used to determine, in subsequent steps, the first target experimental branch corresponding to the first target data file to be stored.

Optionally, the first target data file may include usage behavior data of a user during a process of using a target application, the usage behavior data includes sample data and/or sample label data, and the sample data and the sample label data are used to train a target model. The trained model may be used to predict a target usage behavior of the user and display content matching the target usage behavior for the user based on the target usage behavior. In other embodiments, the data file stored in the target storage system may also be user data that needs to be retained based on General Data Protection Regulation (GDPR) compliance requirements.

It should be noted that after training the model through the new sample data and sample label data, if the model performance is improved, the newly added sample data and sample label data will be retained; and if the model performance is reduced, the newly added sample data and sample label data will be deleted, thus saving the corresponding storage space.

For example, the target application may be a short video application, a news discovery application, a shopping application, etc., which is not specifically limited here. The sample data refers to data used to characterize user behavior, and the sample label data refers to data used to characterize user behavior results. The content of the sample data and the content of the sample label data are different for different types of applications.

For example, for news applications, the sample data may be related data such as the browsing content and browsing time of the user browsing news. Correspondingly, the sample label data may be collection, like or dislike data for a certain news content. For shopping applications, the sample data may be consumption data of the user searching for or viewing certain types of shopping content, and correspondingly, the sample label data may be data related to whether the user places an order to purchase or adds a certain item to a shopping cart. For short video applications, the sample data may be the duration data or frequency data of the user watching a certain category of video or a certain video, and the sample label data may be data on whether the user is interested in the video, etc.

It should be noted that the occurrence time of sample data is usually earlier than the occurrence time of sample label data. In addition, the above-mentioned examples of sample data and sample label data are only illustrative. In other embodiments, for different types of applications, the sample data and sample label data may also be determined according to actual application requirements. In addition, the above-mentioned classification of target applications is only an example. Some applications may correspond to several different categories. For example, some short video applications actually have shopping functions and may also be shopping applications.

In some embodiments, a plurality of feature data included in the first target data file have a preset correlation relationship. For example, the plurality of feature data may be usage behavior data of different users within the same time range.

Referring to FIG. 2, each branch corresponds to at least one snapshot, and each snapshot corresponds to at least one data file. For example, snapshot 1 corresponding to the trunk branch corresponds to file 1, file 2, and file 3. Each snapshot further corresponds to a file detail, and the file detail includes the storage paths of respective data files corresponding to the snapshot. In some embodiments, the file detail may further include file attribute information of respective data files. The file attribute information may include file type, file statistical information (for example, the number of feature data included in the data file or which type of feature data is included in the data file), and storage time, etc., without limitation herein.

S102: determining, based on the table metadata, a first target experimental branch that matches the first target branch information carried by the file storage request from the at least one experimental branch, and newly creating a first target snapshot corresponding to the first target experimental branch, in which the first target snapshot is used to indicate a target storage path of the first target data file in the target storage system.

It may be understood that because the file storage request carries the first target branch information, the first target experimental branch corresponding to the first target branch information is determined based on the storage branch information in the table metadata. For example, if the first target branch information carried in the file storage request is experimental branch 1, the experimental branch 1 in the target storage system is determined as the first target experimental branch. The first target branch information carried in the file storage request is determined by the user.

For example, the user may input the first target branch information (for example, experimental branch 1) in a preset file storage interface, and then a file storage request is generated based on the first target branch information. In this way, the file storage request is caused to carry the first target branch information.

Because the first target data file is required to be stored in the target storage system, the first target snapshot is created after the first target branch is determined; and because the first target snapshot is used to indicate the target storage path of the first target data file in the target storage system, in this way, the storage path corresponding to the first target data file is determined.

S103: storing, according to the target storage path indicated by the first target snapshot, the first target data file to a corresponding storage location in the target storage system.

Because the first target snapshot is used to indicate the target storage path of the first target data file in the target storage system, the first target data file may be stored to a storage location in the target storage system corresponding to the target storage path based on the first target snapshot.

Because each snapshot corresponds to a file detail, and the file detail includes the target storage path allocated for the first target data file, in some embodiments, the target data file may be stored to the storage location corresponding to the target storage path based on the target file detail corresponding to the first target snapshot.

In the embodiments of the present disclosure, because the storage architecture of the target storage system is implemented through the trunk branch and at least one experimental branch, when adding a new data file to the target storage system, the new data file may be added through one of the at least one experimental branch; compared with the copy-on-write storage method, the new data file is isolated from data files corresponding to other branches in the target storage system, and there is no need to operate the data in other branches; in this way, the overhead of data processing can be reduced, which is further beneficial to improving the data storage efficiency.

Optionally, for each snapshot, in the case where the data file corresponding to the snapshot is changed (such as adding a new data file or deleting a data file), a new snapshot may be generated and the new snapshot corresponds to the changed data file. Based on the storage architecture shown in FIG. 2, the following is a detailed description of different change scenarios (adding a data file or deleting a data file).
(1) The process of snapshot change is described by taking the case of newly adding a data file as an example.

If the first target branch information carried in the file storage request is experimental branch 2, the first target snapshot (for example, snapshot 3) corresponding to experimental branch 2 may be newly created. Snapshot 3 indicates the target storage path in the target storage system, so that the first target data file may be stored to the storage location corresponding to the target storage path after the target storage path is determined. In this way, when the first target data file is written, the first target data file is isolated from other data files in the storage system.

(2) The process of snapshot change is described by taking the case of deleting a data file as an example.

For example, please refer to FIG. 2 again, if the user needs to delete some feature data in the data file 3 corresponding to the experimental branch 1, according to the architecture in the figure, the data file 3 further has a corresponding indication relationship with the snapshot 1 corresponding to the trunk branch, therefore, the data file 3 cannot be deleted directly. In this case, a data file 6 may be newly created, and all other non-deleted feature data from the data file 3 may be stored in the data file 6; and a file detail 5 may be created, which is a file detail of the data file 6. At the same time, a snapshot 4 corresponding to the experimental branch 1 may be newly added, and the corresponding relationship of the snapshot 4 with both the file detail 3 and the file detail 5 may be established. In this way, part of the feature data in the data file 3 may be deleted, and no effect will be produced on the data files corresponding to the other branches, and the data isolation may be achieved between the experimental branch and the trunk branch in the process of writing the data.

In some embodiments, for each experimental branch, if the data file mounted by the experimental branch has been used for model training and the training result meets the preset requirement, a corresponding indication relationship may be established between the data file and the trunk branch. Specifically, please refer to FIG. 3, which is a flowchart of a method for establishing a corresponding indication relationship between the first target data file and the trunk branch provided by the embodiments of the present disclosure, the method includes the following steps S301~S302.

S301: training a target model based on the first target data file to obtain a training result of the first target data file, and determining whether the training result of the first target data file meets the preset requirement.

Specifically, the feature data in the first target data file is input into the target model, the target model is trained to obtain the training result of the model, and whether the training result meets the preset requirement is judged. Optionally, the training result may include the performance index of the model, and by comparing the performance index of the model with the preset performance index, it may be determined whether the training result meets the preset requirement, and in other embodiments, the judgment may be made in other ways; for example, it may also be that the user manually views the training result to determine whether the training result meets the preset requirements, and there is no limitation herein.

S302: in the case where the training result of the first target data file meets the preset requirement, newly creating a second target snapshot corresponding to the trunk branch, and establishing a corresponding indication relationship between the second target snapshot and the first target data file as well as a pre-existing data file corresponding to the trunk branch.

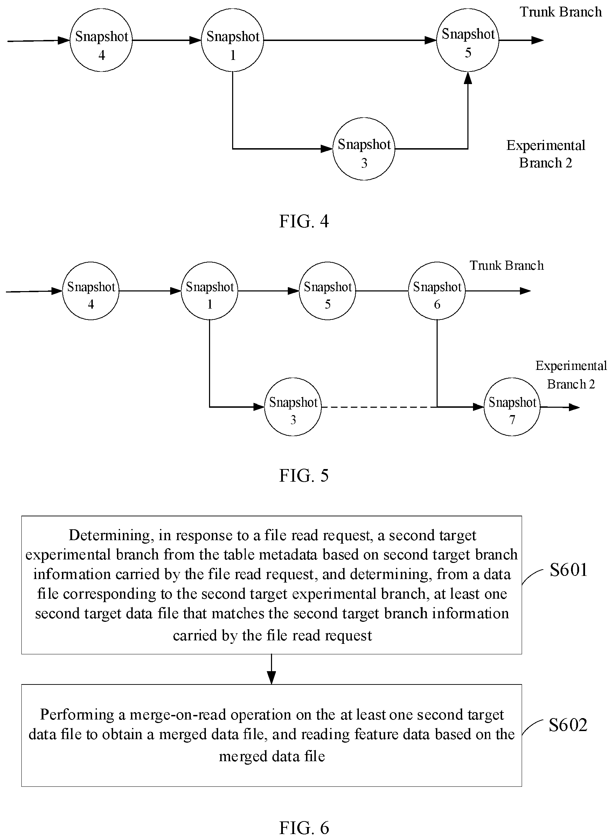

For example, please refer to FIG. 2 and FIG. 4 at the same time. FIG. 4 is a schematic diagram of newly creating a second target snapshot corresponding to the trunk branch provided by the embodiments of the present disclosure, where the trunk branch includes snapshot 4 and snapshot 1. If the training result corresponding to the data file corresponding to the snapshot 3 corresponding to the experimental branch 2 meets the preset requirement, a second target snapshot (i.e., snapshot 5) corresponding to the trunk branch may be newly created, and the corresponding indication relationship between the snapshot 5 and the data file (the data file 5) corresponding to the snapshot 3 corresponding to the experimental branch 2 as well as the pre-existing data file corresponding to the trunk branch (e.g., data files 1, 2, and 3) may be established; in this way, the corresponding indication relationship between the snapshot and the data file is changed without the need for data replication, and in this way, it is beneficial to reducing the overhead of data processing.

Optionally, when establishing the corresponding indication relationship between the second target snapshot and the first target data file as well as the pre-existing data file corresponding to the trunk branch, whether there is conflicting feature data between the first target data file and the pre-existing data file corresponding to the trunk branch is first determined, and in the case where there is no conflicting feature data between the first target data file and the pre-existing data file corresponding to the trunk branch, the corresponding indication relationship between the second target snapshot and the first target data file as well as the pre-existing data file corresponding to the trunk branch is established.

For example, if the first target data file and the pre-existing data file corresponding to the trunk branch both modify the same feature data and the modified contents are different, then it is considered that there is a conflict between the first target data file and the pre-existing data file corresponding to the trunk branch, and the subsequent steps cannot be performed in this case; and if the first target data file and the pre-existing data file corresponding to the trunk branch have respectively added different feature data, then it may be considered that there is no conflict and the subsequent steps may be performed.

It should be noted that in the case where a plurality of experimental branches make different modifications to the same feature data, for example, it is considered that there is a conflict between the data files corresponding to these experimental branches, and it is not possible to perform the subsequent steps. If the contents modified by a plurality of experimental branches do not affect each other, then it is considered that there is no conflict, in this case, a new snapshot corresponding to the trunk branch may be newly created, and the corresponding indication relationship between the new snapshot and respective data files corresponding to the plurality of experimental branches as well as the pre-existing data file corresponding to the trunk branch may be established.

In some embodiments, the feature data in the first target data file may be data obtained by performing a change operation (such as arithmetic operation) on the feature data in the data file corresponding to the trunk branch according to a preset change logic. In the case where the data file corresponding to the trunk branch is changed (for example, new data is written), the changed first target data file is obtained based on the latest changed data file corresponding to the trunk branch and the preset change logic; in this case, because the first target data file has changed, it is necessary to newly create a third snapshot corresponding to the first target experimental branch, and establish a corresponding indication relationship between the third target snapshot and the changed first target data file, so that feature research may be performed based on the latest data file corresponding to the experimental branch.

For example, please refer to FIG. 5, which is a schematic diagram of newly creating a new snapshot corresponding to an experimental branch provided by the embodiments of the present disclosure, as illustrated in FIG. 5, the snapshots corresponding to the trunk branch include snapshot 4, snapshot 1, snapshot 5 and snapshot 6, the experimental branch 2 corresponds to snapshot 3, and the data file corresponding to snapshot 3 is obtained by logically changing the data file corresponding to snapshot 1. With the change from snapshot 1 to snapshot 6 corresponding to the trunk branch (the change from snapshot 1 to snapshot 6 refers to the change of the data file corresponding to the snapshot), the logical change may be performed based on the new data file corresponding to the trunk branch, to obtain a new data file corresponding to experimental branch 2; snapshot 7 is newly created on an experimental branch, and a corresponding indication relationship between snapshot 7 and the new data file corresponding to the experimental branch 2 is established; in this way, it may be ensured that the data file corresponding to experimental branch 2 is the latest data file.

In the embodiments of the present disclosure, the target storage system further supports the ability to be cleaned regularly. If the data file corresponding to an experimental branch is a failed experiment data file, the experimental branch may be deleted from the table metadata. For example, please refer to FIG. 2 again, if the data file 5 corresponding to the experimental branch 2 is a failed experiment data file, the experimental branch 2 may be deleted from the table metadata. In this way, the deletion of data may be performed by a relatively low data overhead, and it also does not have an effect on the other data as well.

Optionally, for each snapshot, it may be determined whether a retention duration of each snapshot exceeds a preset duration, and in the case where the retention duration of the snapshot exceeds the preset duration and there is no corresponding relationship between the snapshot and any branch, the snapshot may be deleted from the table metadata.

Optionally, for each branch, in the case where there is a file detail on the branch that does not have a corresponding relationship with any snapshot, the file detail may be deleted from the table metadata. Similarly, for each data file, in the case where the data file does not have a corresponding indication relationship with any snapshot corresponding to each branch, the data file is deleted.

It should be understood that after data is stored, when training the model, the training data required for training needs to be read from the target storage system. Therefore, please refer to FIG. 6, which is a flowchart of a data reading method provided by the embodiments of the present disclosure, the data reading method includes the following steps S601~S602.

S601: determining, in response to a file read request, a second target experimental branch from the table metadata based on second target branch information carried by the file read request, and determining, from a data file corresponding to the second target experimental branch, at least one second target data file that matches the second target branch information carried by the file read request.

The second target branch information carried in the file read request may be identification information used to indicate one branch. For example, if the identification information of experimental branch 1 is ID1, the second target branch information may be ID1, so that the experimental branch 1 may be determined from the table metadata based on the identification information being ID1.

It may be understood that the target storage system is based on the table metadata architecture, therefore, when reading data, it is also necessary to read data according to the architecture. For example, please refer to FIG. 2 again, if the file read request indicates access to the data file corresponding to experimental branch 1, when reading the data file, the data reading may be accomplished based on the following: experimental branch 1 -> snapshot 2 -> file details 1, 2, 3 -> data files 1, 2, 3, 4. As can be seen in FIG. 2, because respective branches are isolated from each other, when reading the data files 1, 2, and 3 corresponding to the trunk branch, the data files 1, 2, and 3 may be read directly without having to replicate the data files 1, 2, and 3 to the storage space corresponding to the experimental branch 1, and in this way, the replication overhead of the data files may be saved. Moreover, because respective experimental branches (e.g., experimental branch 1 and experimental branch 2) are isolated from each other, when reading the data file corresponding to experimental branch 1, there is no need to read the data file corresponding to experimental branch 2, and in this way, the isolation of data reading is achieved.

S602: performing a merge-on-read operation on the at least one second target data file to obtain a merged data file, and reading feature data based on the merged data file.

Optionally, when performing the merge-on-read operation on a plurality of second target data files, a multi-path merging algorithm may be adopted for performing the merge-on-read operation.

For example, for data files 1, 2, 3, and 4, a multi-path merging algorithm may be adopted to perform the merge-on-read operation. In this way, when reading data, there is no need to load all the files in the target storage system into a memory at the same time, and thus there is no performance degradation due to data overflow to disk.

In some embodiments, the at least one second target data file may be sorted based on the primary key of each second target data file, and data reading may be performed on the sorted at least one second target data file adopting a multi-path merging algorithm.

Specifically, in the process of performing data reading on the sorted at least one second target data file adopting a multi-path merging algorithm, respective feature data need to be aligned and merged. In this embodiment, feature data having the same identification information may be merged based on the identification information of respective feature data in the plurality of second target data files, to obtain the merged data file; for example, the identification information may be a row primary key or other identification information capable of uniquely identifying the respective feature data in addition to the row primary key, without limitation herein.

Those skilled in the art may understand that in the above-mentioned methods of specific embodiments, the writing order of respective steps does not mean a strict execution order and does not constitute any limitation on the implementation process. The specific execution order of respective steps should be determined based on function and possible internal logic of respective steps.

Based on the same technical concept, the embodiments of the present disclosure further provide a data storage apparatus corresponding to the data storage method. Because the principle of solving the problem of the apparatus in the embodiments of the present disclosure is similar to the above-mentioned data storage method of the embodiments of the present disclosure, the implementation of the apparatus may refer to the implementation of the method, and the repeated parts will not be repeated.

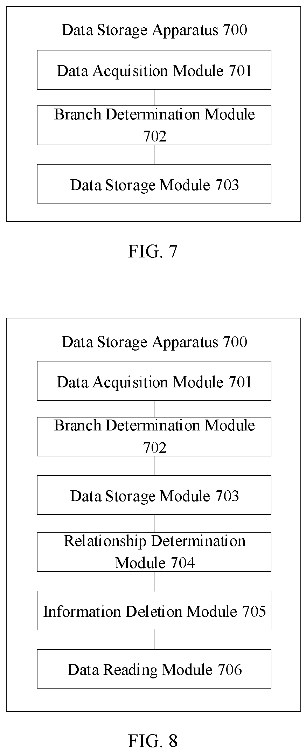

Referring to FIG. 7, which is a schematic diagram of a data storage apparatus 700 provided by the embodiments of the present disclosure, the data storage apparatus includes:
a data acquisition module 701, which is configured to acquire, in response to a file storage request for a first target data file, the first target data file to be stored in a target storage system, in which the first target data file includes at least one feature data, the target storage system is configured with table metadata, the table metadata is used to indicate storage branch information corresponding to the target storage system, the storage branch information includes a trunk branch and at least one experimental branch, the trunk branch is used to mount a data file that has been used for model training and a training result of the data file meets a preset requirement, the experimental branch is used to mount a data file that has not been used for model training, and the file storage request carries first target branch information;
a branch determination module 702, which is configured to determine, based on the table metadata, a first target experimental branch that matches the first target branch information carried by the file storage request from the at least one experimental branch, and newly create a first target snapshot corresponding to the first target experimental branch, in which the first target snapshot is used to indicate a target storage path of the first target data file in the target storage system;
and a data storage module 703, which is configured to store, according to the target storage path indicated by the first target snapshot, the first target data file to a corresponding storage location in the target storage system.

**In** a possible embodiment, the first target snapshot corresponds to a target file detail, and the target file detail includes the target storage path allocated for the first target data file in the target storage system; and the data storage module 703 is specifically configured to:
store, according to the target storage path included in the target file detail corresponding to the first target snapshot, the first target data file to a storage location corresponding to the target storage path.

Please refer to FIG. 8, which is a schematic diagram of a structure of another data storage apparatus provided by the embodiments of the present disclosure, the data storage apparatus further includes a relationship determination module 704, and the relationship determination module 704 is configured to:
train a target model based on the first target data file to obtain a training result of the first target data file, and determine whether the training result of the first target data file meets the preset requirement;
and in a case where the training result of the first target data file meets the preset requirement, newly create a second target snapshot corresponding to the trunk branch, and establish a corresponding indication relationship between the second target snapshot and the first target data file as well as a pre-existing data file corresponding to the trunk branch.

In a possible embodiment, the relationship determination module 704 is specifically configured to:
determine whether there is conflicting feature data between the first target data file and the pre-existing data file corresponding to the trunk branch;
and in a case where there is no conflicting feature data between the first target data file and the pre-existing data file corresponding to the trunk branch, establish the corresponding indication relationship between the second target snapshot and the first target data file as well as the pre-existing data file corresponding to the trunk branch.

In a possible embodiment, the relationship determination module 704 is further configured to:
in a case where the feature data in the first target data file is data obtained by changing feature data in a data file corresponding to the trunk branch based on a preset change logic, and in a case where the data file corresponding to the trunk branch is changed, obtain a changed first target data file based on the latest changed data file corresponding to the trunk branch and the preset change logic;
and newly create a third target snapshot corresponding to the first target experimental branch, and establish a corresponding indication relationship between the third target snapshot and the changed first target data file.

In a possible embodiment, the data storage apparatus further includes an information deletion module 705, and the information deletion module 705 is configured to:
for each snapshot, determine whether a retention duration of each snapshot exceeds a preset duration;
and delete a snapshot in a case where a retention duration of the snapshot exceeds the preset duration and the snapshot is not connected by any branch.

In a possible embodiment, the information deletion module 705 is further configured to:
for each branch, in a case where there is a file detail on the branch that does not have a corresponding relationship with any snapshot, delete the file detail that does not have a corresponding relationship from the table metadata;
and/or for each branch, in a case where there is a data file on the branch that does not have a corresponding indication relationship with any snapshot, delete the data file that does not have a corresponding indication relationship.

In a possible embodiment, the data storage apparatus further includes a data reading module 706,
the branch determination module 702 is further configured to:
determine, in response to a file read request, a second target experimental branch from the table metadata based on second target branch information carried by the file read request, and determine, from a data file corresponding to the second target experimental branch, at least one second target data file that matches the second target branch information carried by the file read request;
the data reading module 706 is further configured to:
   perform a merge-on-read operation on the at least one second target data file to obtain a merged data file, and read feature data based on the merged data file.

The descriptions of the processing flow of the modules in the apparatus and the interaction flow between the modules may be referred to the relevant descriptions in the above-mentioned method embodiments, and will not be described in detail herein.

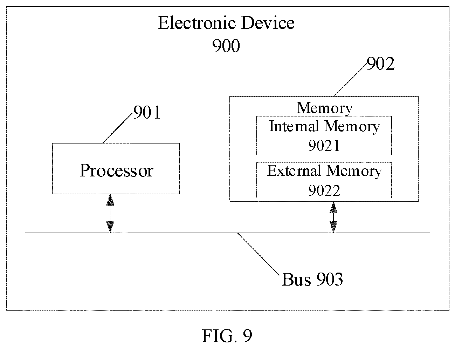

Based on the same technical concept, the embodiments of the present disclosure further provide an electronic device. Referring to FIG. 9, which is a schematic diagram of a structure of an electronic device 900 provided by the embodiments of the present disclosure, the electronic device 900 includes a processor 901, a memory 902, and a bus 903. The memory 902 is configured to store execution instructions, including a memory 9021 and an external memory 9022; the memory 9021 here is also called an internal memory, which is configured to temporarily store the operation data in the processor 901, as well as the data exchanged with the external memory 9022 such as a hard disk, and the processor 901 exchanges data with the external memory 9022 through the memory 9021.

In the embodiments of the present disclosure, the memory 902 is specifically configured to store application code for executing the solutions of the present disclosure, and is controlled by the processor 901 for execution. That is, when the electronic device 900 is running, the processor 901 and the memory 902 communicate with each other through the bus 903, so that the processor 901 executes the application code stored in the memory 902, and then executes the method described in any of the foregoing embodiments.

The memory 902 may be, but is not limited to, a random access memory (RAM), a read only memory (ROM), a programmable read-only memory (PROM), an erasable programmable read-only memory (EPROM), and an electric erasable programmable read-only memory (EEPROM), etc.

The processor 901 may be an integrated circuit chip with signal processing capability. The above-mentioned processor may be a general-purpose processor, including a central processing unit (CPU), a network processor (NP), etc., and may also be a digital signal processor (DSP), an application specific integrated circuit (ASIC), a field programmable gate array (FPGA) or other programmable logic devices, discrete gate or transistor logic devices, or discrete hardware components. The processor can implement or execute the methods, steps, and logical block diagrams disclosed in the embodiments of the present disclosure. The general-purpose processor may be a microprocessor or the processor may also be any conventional processor, etc.

It should be understood that the structure illustrated in the embodiment of the present disclosure does not constitute a specific limitation on the electronic device 900. **In** other embodiments of the present disclosure, the electronic device 900 may include more or less components than shown in the figures, or some components may be combined, some components may be separated, or some components may be arranged differently. The components illustrated may be implemented in hardware, software, or a combination of software and hardware.

The embodiments of the present disclosure further provide a computer-readable storage medium, a computer program is stored on the computer-readable storage medium, and when the computer program is run by a processor, the steps of the data storage method in the above-mentioned method embodiments are executed. For example, the storage medium may be a volatile or non-volatile computer-readable storage medium.

The embodiments of the present disclosure further provide a computer program product. The computer program product carries program code, and instructions included in the program code can be used to execute the steps of the data storage method in the above-mentioned method embodiments. For details, please refer to the above-mentioned method embodiments, which will not be described in detail herein.

For example, the above-mentioned computer program product may be specifically implemented by hardware, software or a combination thereof. **In** an optional embodiment, the computer program product is embodied as a computer storage medium. **In** another optional embodiment, the computer program product is embodied as a software product, such as a Software Development Kit (SDK), etc.

Those skilled in the art can clearly understand that for the convenience and simplicity of description, the specific working processes of the systems and apparatuses described above can be referred to the corresponding processes in the foregoing method embodiments, and will not be described again herein. **In** the several embodiments provided in the present disclosure, it should be understood that the disclosed systems, apparatuses and methods can be implemented in other ways. The apparatus embodiments as described above are only schematic, for example, the division of the units may be logical functional division; in actual implementation, there may be other division modes, for another example, a plurality of units or components may be combined or integrated into another system, or some features may be ignored or not executed. On the other hand, the coupling or direct coupling or communication connection displayed or discussed between each other may be indirect coupling or communication connection through some interfaces, apparatuses, or units, which may be in a form of electrical, mechanical or other forms.

The above-mentioned units illustrated as separate components may be, or may not be physically separated, and the components displayed as units may be, or may not be, physical units, that is, they may be at one place, or may also be distributed to a plurality of network units; and some or all of the units may be selected according to actual needs to achieve the purpose of the solutions of the present embodiment.

In addition, the respective functional units in the respective embodiments of the present disclosure may be integrated in one processing unit, or each unit may physically exist separately, or two or more units may be integrated in one unit.

In the case that the functions are implemented in a form of software functional unit and sold or used as an independent product, they may be stored in a non-volatile computer-readable storage medium that is executable by a processor. Based on such understanding, the technical solutions of the present disclosure, in essence, or part of the technical solutions, may be embodied in a form of a software product; the computer software product is stored in a storage medium and includes several instructions so that a computer device (which may be a personal computer, a server, or a network device, etc.) to execute all or part of steps of the methods according to the respective embodiments of the present disclosure. The foregoing storage medium includes a USB flash disk, a removable hard disk, a Read-Only Memory, a Random Access Memory, a magnetic disk or an optical disk, and various other media that can store program codes.

Finally, it should be noted that the above-mentioned embodiments are only specific implementations of the present disclosure to illustrate the technical solutions of the present disclosure rather than to limit them, and the protection scope of the present disclosure is not limited thereto. Although the present disclosure has been described in detail with reference to the foregoing embodiments, those of ordinary skill in the art should understand that, within the scope of the technology disclosed in the present disclosure, any person of skill familiar with the technical field can still modify or easily think of changes to the technical solutions recorded in the foregoing embodiments, or make equivalent substitutions for some of the technical features therein; and these modifications, changes or substitutions shall be covered within the protection scope of the present disclosure. Therefore, the protection scope of the present disclosure should be determined by the protection scope of the claims.

## Claims

1. A data storage method, comprising:
acquiring, in response to a file storage request for a first target data file, the first target data file to be stored in a target storage system, wherein the first target data file comprises at least one feature data, the target storage system is configured with table metadata, the table metadata is used to indicate storage branch information corresponding to the target storage system, the storage branch information comprises a trunk branch and at least one experimental branch, the trunk branch is used to mount a data file that has been used for model training and a training result of the data file meets a preset requirement, the at least one experimental branch is used to mount a data file that has not been used for model training, the trunk branch and the at least one experimental branch are isolated from each other, and the file storage request carries first target branch information;
determining, based on the table metadata, a first target experimental branch that matches the first target branch information carried by the file storage request from the at least one experimental branch, and newly creating a first target snapshot corresponding to the first target experimental branch, wherein the first target snapshot is used to indicate a target storage path of the first target data file in the target storage system; and
storing, according to the target storage path indicated by the first target snapshot, the first target data file to a corresponding storage location in the target storage system, wherein the first target data file is isolated from data files corresponding to other experimental branches and the trunk branch in the target storage system;
wherein the method further comprises:
training a target model based on the first target data file to obtain a training result of the first target data file, and determining whether the training result of the first target data file meets the preset requirement (S301); and
in a case where the training result of the first target data file meets the preset requirement, newly creating a second target snapshot corresponding to the trunk branch, and establishing a corresponding indication relationship between the second target snapshot and the first target data file as well as a pre-existing data file corresponding to the trunk branch (S302).

2. The method according to claim 1, wherein the first target snapshot corresponds to a target file detail, and the target file detail comprises the target storage path allocated for the first target data file in the target storage system; and
wherein the storing, according to the target storage path indicated by the first target snapshot, the first target data file to the corresponding storage location in the target storage system comprises:
storing, according to the target storage path comprised in the target file detail corresponding to the first target snapshot, the first target data file to a storage location corresponding to the target storage path.

3. The method according to claim 1, wherein the establishing the corresponding indication relationship between the second target snapshot and the first target data file as well as the pre-existing data file corresponding to the trunk branch comprises:
determining whether there is conflicting feature data between the first target data file and the pre-existing data file corresponding to the trunk branch; and
in a case where there is no conflicting feature data between the first target data file and the pre-existing data file corresponding to the trunk branch, establishing the corresponding indication relationship between the second target snapshot and the first target data file as well as the pre-existing data file corresponding to the trunk branch.

4. The method according to any one of claims 1-3, wherein, in a case where the at least one feature data in the first target data file is data obtained by changing feature data in a data file corresponding to the trunk branch based on a preset change logic, the method further comprises:
in a case where the data file corresponding to the trunk branch is changed, obtaining a changed first target data file based on a latest changed data file corresponding to the trunk branch and the preset change logic; and
newly creating a third target snapshot corresponding to the first target experimental branch, and establishing a corresponding indication relationship between the third target snapshot and the changed first target data file.

5. The method according to any one of claims 1-4, further comprising:
for each snapshot, determining whether a retention duration of each snapshot exceeds a preset duration; and
deleting a snapshot in a case where a retention duration of the snapshot exceeds the preset duration and the snapshot is not connected by any branch.

6. The method according to claim 2, further comprising:
for each branch, in a case where there is a file detail on the branch that does not have a corresponding relationship with any snapshot, deleting the file detail that does not have a corresponding relationship from the table metadata; and/or
for each branch, in a case where there is a data file on the branch that does not have a corresponding indication relationship with any snapshot, deleting the data file that does not have a corresponding indication relationship.

7. The method according to claim 1 or 2, further comprising:
determining, in response to a file read request, a second target experimental branch from the table metadata based on second target branch information carried by the file read request, and determining, from a data file corresponding to the second target experimental branch, at least one second target data file that matches the second target branch information carried by the file read request (S601); and
performing a merge-on-read operation on the at least one second target data file to obtain a merged data file, and reading feature data based on the merged data file (S602).

8. The method according to claim 7, wherein feature data in the data file further has identification information; and
wherein the performing the merge-on-read operation on the at least one second target data file to obtain the merged data file comprises:
merging, according to identification information of respective feature data in the at least one second target data file, feature data having the same identification information to obtain the merged data file.

9. A data storage apparatus (700), comprising:
a data acquisition module (701), configured to acquire, in response to a file storage request for a first target data file, the first target data file to be stored in a target storage system, wherein the first target data file comprises at least one feature data, the target storage system is configured with table metadata, the table metadata is used to indicate storage branch information corresponding to the target storage system, the storage branch information comprises a trunk branch and at least one experimental branch, the trunk branch is used to mount a data file that has been used for model training and a training result of the data file meets a preset requirement, the at least one experimental branch is used to mount a data file that has not been used for model training, the trunk branch and the at least one experimental branch are isolated from each other, and the file storage request carries first target branch information;
a branch determination module (702), configured to determine, based on the table metadata, a first target experimental branch that matches the first target branch information carried by the file storage request from the at least one experimental branch, and newly create a first target snapshot corresponding to the first target experimental branch, wherein the first target snapshot is used to indicate a target storage path of the first target data file in the target storage system; and
a data storage module (703), configured to store, according to the target storage path indicated by the first target snapshot, the first target data file to a corresponding storage location in the target storage system, wherein the first target data file is isolated from data files corresponding to other experimental branches and the trunk branch in the target storage system;
wherein the data storage apparatus (700) further comprises a relationship determination module (704), and the relationship determination module (704) is configured to:
train a target model based on the first target data file to obtain a training result of the first target data file, and determine whether the training result of the first target data file meets the preset requirement; and
in a case where the training result of the first target data file meets the preset requirement, newly create a second target snapshot corresponding to the trunk branch, and establish a corresponding indication relationship between the second target snapshot and the first target data file as well as a pre-existing data file corresponding to the trunk branch.

10. An electronic device (900), comprising a processor (901), a memory (902) and a bus (903), wherein the memory (902) stores machine-readable instructions executable by the processor (901) , and when the electronic device (900) is running, the processor (901) and the memory (902) communicate with each other through the bus (903); when the machine-readable instructions are executed by the processor (901), the data storage method according to any one of claims 1-8 is implemented.

11. A computer-readable storage medium, wherein the computer-readable storage medium stores a computer program, and when the computer program is run by a processor, the data storage method according to any one of claims 1-8 is implemented.

## Patentansprüche

1. Datenspeicherverfahren, umfassend:
Erfassen, als Reaktion auf eine Dateispeicheranfrage für eine erste Zieldatendatei, der ersten Zieldatendatei, die in einem Zielspeichersystem gespeichert werden soll, wobei die erste Zieldatendatei mindestens ein Merkmalsdatenelement umfasst, wobei das Zielspeichersystem mit Tabellenmetadaten konfiguriert ist, wobei die Tabellenmetadaten verwendet werden, um Speicherzweiginformationen anzugeben, die dem Zielspeichersystem entsprechen, wobei die Speicherzweiginformationen einen Stammzweig und mindestens einen Experimentalzweig umfassen, wobei der Stammzweig verwendet wird, um eine Datendatei zu mounten, die für das Modelltraining verwendet wurde, und ein Trainingsergebnis der Datendatei eine voreingestellte Anforderung erfüllt, wobei der mindestens eine Experimentalzweig verwendet wird, um eine Datendatei zu mounten, die nicht für das Modelltraining verwendet wurde, wobei der Stammzweig und der mindestens eine Experimentalzweig voneinander isoliert sind, und die Dateispeicheranfrage erste Zielzweiginformationen übermittelt;
Bestimmen, auf Basis der Tabellenmetadaten, eines ersten Zielexperimentalzweiges, der zu den in der Dateispeicheranfrage übermittelten ersten Zielzweiginformationen passt, aus dem mindestens einen Experimentalzweig, und Neuerzeugen eines ersten Ziel-Snapshots, der dem ersten Zielexperimentalzweig entspricht, wobei der erste Ziel-Snapshot verwendet wird, um einen Zielspeicherpfad der ersten Zieldatendatei in dem Zielspeichersystem anzugeben; und
Speichern der ersten Zieldatendatei gemäß dem in dem ersten Ziel-Snapshot angegebenen Zielspeicherpfad an einem entsprechenden Speicherort in dem Zielspeichersystem, wobei die erste Zieldatendatei in dem Zielspeichersystem von Datendateien, die anderen Experimentalzweigen und dem Stammzweig entsprechen, isoliert wird;
wobei das Verfahren weiter umfasst:
Trainieren eines Zielmodells auf Basis der ersten Zieldatendatei, um ein Trainingsergebnis der ersten Zieldatendatei zu erhalten, und Bestimmen, ob das Trainingsergebnis der ersten Zieldatendatei die voreingestellte Anforderung erfüllt (S301); und
falls das Trainingsergebnis der ersten Zieldatendatei die voreingestellte Anforderung erfüllt, Neuerzeugen eines zweiten Ziel-Snapshots, der dem Stammzweig entspricht, und Herstellen einer Entsprechungsangabebeziehung zwischen dem zweiten Ziel-Snapshot und der ersten Zieldatendatei sowie einer bereits vorhandenen Datendatei, die dem Stammzweig entspricht (S302).

2. Verfahren nach Anspruch 1, wobei der erste Ziel-Snapshot einem Zieldateidetail entspricht, und das Zieldateidetail den der ersten Zieldatendatei in dem Zielspeichersystem zugeordneten Zielspeicherpfad umfasst; und
wobei das Speichern der ersten Zieldatendatei gemäß dem in dem ersten Ziel-Snapshot angegebenen Zielspeicherpfad an dem entsprechenden Speicherort in dem Zielspeichersystem umfasst:
Speichern der ersten Zieldatendatei gemäß dem Zielspeicherpfad, der in dem dem ersten Ziel-Snapshot entsprechenden Zieldateidetail umfasst ist, an einem Speicherort, der dem Zielspeicherpfad entspricht.

3. Verfahren nach Anspruch 1, wobei das Herstellen der Entsprechungsangabebeziehung zwischen dem zweiten Ziel-Snapshot und der ersten Zieldatendatei sowie der bereits vorhandenen Datendatei, die dem Stammzweig entspricht, umfasst:
Bestimmen, ob es zwischen der ersten Zieldatendatei und der bereits vorhandenen Datendatei, die dem Stammzweig entspricht, widersprüchliche Merkmalsdaten gibt; und
falls es zwischen der ersten Zieldatendatei und der bereits vorhandenen Datendatei, die dem Stammzweig entspricht, keine widersprüchlichen Merkmalsdaten gibt, Herstellen der Entsprechungsangabebeziehung zwischen dem zweiten Ziel-Snapshot und der ersten Zieldatendatei sowie der bereits vorhandenen Datendatei, die dem Stammzweig entspricht.

4. Verfahren nach einem der Ansprüche 1-3, wobei das Verfahren, falls es sich bei dem mindestens einen Merkmalsdatenelement in der ersten Zieldatendatei um Daten handelt, die durch Ändern von Merkmalsdaten in einer Datendatei, die dem Stammzweig entspricht, auf Basis einer voreingestellten Änderungslogik erhalten werden, weiter umfasst:
falls die Datendatei, die dem Stammzweig entspricht, geändert wird, Erhalten einer geänderten ersten Zieldatendatei auf Basis einer zuletzt geänderten Datendatei, die dem Stammzweig entspricht, und der voreingestellten Änderungslogik; und
Neuerzeugen eines dritten Ziel-Snapshots, der dem ersten Zielexperimentalzweig entspricht, und Herstellen einer Entsprechungsangabebeziehung zwischen dem dritten Ziel-Snapshot und der geänderten ersten Zieldatendatei.

5. Verfahren nach einem der Ansprüche 1-4, weiter umfassend:
Bestimmen, für jeden Snapshot, ob eine Aufbewahrungsdauer jedes Snapshots eine voreingestellte Dauer überschreitet; und
Löschen eines Snapshots, falls eine Aufbewahrungsdauer des Snapshots die voreingestellte Dauer überschreitet und der Snapshot durch keinen Zweig verbunden ist.

6. Verfahren nach Anspruch 2, weiter umfassend:
für jeden Zweig, falls es auf dem Zweig ein Dateidetail gibt, das keine Entsprechungsbeziehung zu einem Snapshot aufweist, Löschen des Dateidetails, das keine Entsprechungsbeziehung aufweist, aus den Tabellenmetadaten; und/oder
für jeden Zweig, falls es auf dem Zweig eine Datendatei gibt, die keine Entsprechungsangabebeziehung zu einem Snapshot aufweist, Löschen der Datendatei, die keine Entsprechungsangabebeziehung aufweist.

7. Verfahren nach Anspruch 1 oder 2, weiter umfassend:
Bestimmen, als Reaktion auf eine Dateileseanfrage, eines zweiten Zielexperimentalzweiges aus den Tabellenmetadaten auf Basis von zweiten Zielzweiginformationen, die in der Dateileseanfrage übermittelt werden, und Bestimmen, aus einer Datendatei, die dem zweiten Zielexperimentalzweig entspricht, mindestens einer zweiten Zieldatendatei, die zu den in der Dateileseanfrage übermittelten zweiten Zielzweiginformationen passt (S601); und
Durchführen einer Merge-on-Read-Operation an der mindestens einen zweiten Zieldatendatei, um eine zusammengeführte Datendatei zu erhalten, und Lesen von Merkmalsdaten auf Basis der zusammengeführten Datendatei (S602).

8. Verfahren nach Anspruch 7, wobei die Merkmalsdaten in der Datendatei weiter Identifikationsinformationen aufweisen; und
wobei das Durchführen der Merge-on-Read-Operation an der mindestens einen zweiten Zieldatendatei, um die zusammengeführte Datendatei zu erhalten, umfasst:
Zusammenführen, gemäß Identifikationsinformationen jeweiliger Merkmalsdaten in der mindestens einen zweiten Zieldatendatei, von Merkmalsdaten, die die gleichen Identifikationsinformationen aufweisen, um die zusammengeführte Datendatei zu erhalten.

9. Datenspeichereinrichtung (700), umfassend:
ein Datenerfassungsmodul (701), das so konfiguriert ist, dass es als Reaktion auf eine Dateispeicheranfrage für eine erste Zieldatendatei die erste Zieldatendatei, die in einem Zielspeichersystem gespeichert werden soll, erfasst, wobei die erste Zieldatendatei mindestens ein Merkmalsdatenelement umfasst, wobei das Zielspeichersystem mit Tabellenmetadaten konfiguriert ist, wobei die Tabellenmetadaten verwendet werden, um Speicherzweiginformationen anzugeben, die dem Zielspeichersystem entsprechen, wobei die Speicherzweiginformationen einen Stammzweig und mindestens einen Experimentalzweig umfassen, wobei der Stammzweig verwendet wird, um eine Datendatei zu mounten, die für das Modelltraining verwendet wurde, und ein Trainingsergebnis der Datendatei eine voreingestellte Anforderung erfüllt, wobei der mindestens eine Experimentalzweig verwendet wird, um eine Datendatei zu mounten, die nicht für das Modelltraining verwendet wurde, wobei der Stammzweig und der mindestens eine Experimentalzweig voneinander isoliert sind, und die Dateispeicheranfrage erste Zielzweiginformationen übermittelt;
ein Zweigbestimmungsmodul (702), das so konfiguriert ist, dass es auf Basis der Tabellenmetadaten einen ersten Zielexperimentalzweig, der zu den in der Dateispeicheranfrage übermittelten ersten Zielzweiginformationen passt, aus dem mindestens einen Experimentalzweig bestimmt, und einen ersten Ziel-Snapshot, der dem ersten Zielexperimentalzweig entspricht, neu erzeugt, wobei der erste Ziel-Snapshot verwendet wird, um einen Zielspeicherpfad der ersten Zieldatendatei in dem Zielspeichersystem anzugeben; und
ein Datenspeichermodul (703), das so konfiguriert ist, dass es die erste Zieldatendatei gemäß dem in dem ersten Ziel-Snapshot angegebenen Zielspeicherpfad an einem entsprechenden Speicherort in dem Zielspeichersystem speichert, wobei die erste Zieldatendatei in dem Zielspeichersystem von Datendateien, die anderen Experimentalzweigen und dem Stammzweig entsprechen, isoliert wird;
wobei die Datenspeichereinrichtung (700) weiter ein Beziehungsbestimmungsmodul (704) umfasst, und das Beziehungsbestimmungsmodul (704) so konfiguriert ist, dass es:
ein Zielmodell auf Basis der ersten Zieldatendatei trainiert, um ein Trainingsergebnis der ersten Zieldatendatei zu erhalten, und bestimmt, ob das Trainingsergebnis der ersten Zieldatendatei die voreingestellte Anforderung erfüllt; und
falls das Trainingsergebnis der ersten Zieldatendatei die voreingestellte Anforderung erfüllt, einen zweiten Ziel-Snapshot, der dem Stammzweig entspricht, neu erzeugt und eine Entsprechungsangabebeziehung zwischen dem zweiten Ziel-Snapshot und der ersten Zieldatendatei sowie einer bereits vorhandenen Datendatei, die dem Stammzweig entspricht, herstellt.

10. Elektronische Vorrichtung (900), die einen Prozessor (901), einen Speicher (902) und einen Bus (903) umfasst, wobei der Speicher (902) maschinenlesbare Anweisungen speichert, die von dem Prozessor (901) ausgeführt werden können, und wenn die elektronische Vorrichtung (900) läuft, der Prozessor (901) und der Speicher (902) über den Bus (903) miteinander kommunizieren; wenn die maschinenlesbaren Anweisungen von dem Prozessor (901) ausgeführt werden, das Datenspeicherverfahren nach einem der Ansprüche 1-8 implementiert wird.

11. Computerlesbares Speichermedium, wobei das computerlesbare Speichermedium ein Computerprogramm speichert, und wenn das Computerprogramm von einem Prozessor ausgeführt wird, das Datenspeicherverfahren nach einem der Ansprüche 1-8 implementiert wird.

## Revendications

1. Procédé de stockage de données, comprenant :
l'acquisition, en réponse à une demande de stockage de fichier pour un premier fichier de données cible, du premier fichier de données cible à stocker dans un système de stockage cible, dans lequel le premier fichier de données cible comprend au moins une donnée de caractéristique, le système de stockage cible est configuré avec des métadonnées de table, les métadonnées de table sont utilisées pour indiquer des informations de branche de stockage correspondant au système de stockage cible, les informations de branche de stockage comprennent une branche principale et au moins une branche expérimentale, la branche principale est utilisée pour monter un fichier de données qui a été utilisé pour un entraînement de modèle et dont le résultat d'entraînement répond à une exigence prédéfinie, la au moins une branche expérimentale est utilisée pour monter un fichier de données qui n'a pas été utilisé pour un entraînement de modèle, la branche principale et la au moins une branche expérimentale sont isolées l'une de l'autre, et la demande de stockage de fichier contient des informations de première branche cible ;
la détermination, sur la base des métadonnées de table, d'une première branche expérimentale cible correspondant aux informations de première branche cible contenues dans la demande de stockage de fichier provenant de la au moins une branche expérimentale, et la création d'un premier instantané cible correspondant à la première branche expérimentale cible, dans lequel le premier instantané cible est utilisé pour indiquer un trajet de stockage cible du premier fichier de données cible dans le système de stockage cible ; et
le stockage, selon le trajet de stockage cible indiqué par le premier instantané cible, du premier fichier de données cible dans un emplacement de stockage correspondant du système de stockage cible, dans lequel le premier fichier de données cible est isolé des fichiers de données correspondant aux autres branches expérimentales et à la branche principale du système de stockage cible ;
dans lequel le procédé comprend en outre :
l'entraînement d'un modèle cible sur la base du premier fichier de données cible afin d'obtenir un résultat d'entraînement du premier fichier de données cible, et la détermination si le résultat d'entraînement du premier fichier de données cible répond aux exigences prédéfinies (S301) ; et
dans le cas où le résultat de l'entraînement du premier fichier de données cible répond à l'exigence prédéfinie, la création d'un deuxième instantané cible correspondant à la branche principale et l'établissement d'une relation d'indication correspondante entre le deuxième instantané cible et le premier fichier de données cible ainsi que d'un fichier de données préexistant correspondant à la branche principale (S302).

2. Procédé selon la revendication 1, dans lequel le premier instantané cible correspond à un détail de fichier cible, et le détail de fichier cible comprend le trajet de stockage cible alloué au premier fichier de données cible dans le système de stockage cible ; et
dans lequel le stockage, selon le trajet de stockage cible indiqué par le premier instantané cible, le premier fichier de données cible à l'emplacement de stockage correspondant dans le système de stockage cible comprend :
le stockage, selon le trajet de stockage cible compris dans le détail de fichier cible correspondant au premier instantané cible, du premier fichier de données cible dans un emplacement de stockage correspondant au trajet de stockage cible.

3. Procédé selon la revendication 1, dans lequel l'établissement de la relation d'indication correspondante entre le deuxième instantané cible et le premier fichier de données cible ainsi que le fichier de données préexistant correspondant à la branche principale comprend :
la détermination s'il existe des données caractéristiques conflictuelles entre le premier fichier de données cible et le fichier de données préexistant correspondant à la branche principale ; et
dans le cas où il n'existe aucune donnée caractéristique conflictuelle entre le premier fichier de données cible et le fichier de données préexistant correspondant à la branche principale, l'établissement de la relation d'indication correspondante entre le deuxième instantané cible et le premier fichier de données cible ainsi que du fichier de données préexistant correspondant à la branche principale.

4. Procédé selon l'une quelconque des revendications 1-3, dans lequel, dans le cas où la au moins une donnée caractéristique du premier fichier de données cible est une donnée obtenue en modifiant des données caractéristiques dans un fichier de données correspondant à la branche principale sur la base d'une logique de modification prédéfinie, le procédé comprend en outre :
dans le cas où le fichier de données correspondant à la branche principale est modifié, l'obtention d'un premier fichier de données cible modifié sur la base d'un fichier de données dernièrement modifié correspondant à la branche principale et de la logique de modification prédéfinie ;
la création d'un troisième instantané cible correspondant à la première branche expérimentale cible et l'établissement d'une relation d'indication correspondante entre le troisième instantané cible et le fichier de données cible modifié.

5. Procédé selon l'une quelconque des revendications 1-4, comprenant en outre :
pour chaque instantané, la détermination si la durée de conservation de chaque instantané dépasse une durée prédéfinie ; et
la suppression d'un instantané dans le cas où sa durée de conservation dépasse la durée prédéfinie et si l'instantané n'est connecté à aucune branche.

6. Procédé selon la revendication 2, comprenant en outre :
pour chaque branche, dans le cas où il existe un détail de fichier sur la branche qui ne présente pas de relation correspondante avec un instantané, la suppression du détail de fichier qui n'a pas de relation correspondante des métadonnées de table ; et/ou
pour chaque branche, dans le cas où il existe un fichier de données sur la branche qui ne présente pas de relation d'indication correspondante avec un instantané, la suppression du fichier de données qui ne présente pas de relation d'indication correspondante.

7. Procédé selon la revendication 1 ou 2 comprenant en outre :
la détermination, en réponse à une requête de lecture de fichier, d'une seconde branche expérimentale cible à partir des métadonnées de table en fonction des informations de seconde branche cible contenues dans la requête de lecture de fichier, et la détermination, à partir d'un fichier de données correspondant à la seconde branche expérimentale cible, d'au moins un second fichier de données cible correspondant aux informations de seconde branche cible contenues dans la requête de lecture de fichier (S601) ; et
la réalisation d'une opération de fusion à la lecture sur le au moins un second fichier de données cible pour obtenir un fichier de données fusionné, et la lecture des données caractéristiques sur la base du fichier de données fusionné (S602).

8. Procédé selon la revendication 7, dans lequel les données caractéristiques du fichier de données présentent en outre des informations d'identification ; et
dans lequel l'exécution de l'opération de fusion à la lecture sur au moins un second fichier de données cible pour obtenir le fichier de données fusionné comprend :
la fusion, selon les informations d'identification des données caractéristiques respectives dans le au moins un second fichier de données cible, des données caractéristiques présentant les mêmes informations d'identification pour obtenir le fichier de données fusionné.

9. Appareil de stockage de données (700) comprenant :
un module d'acquisition de données (701), configuré pour acquérir, en réponse à une demande de stockage de fichier pour un premier fichier de données cible, le premier fichier de données cible à stocker dans un système de stockage cible, dans lequel le premier fichier de données cible comprend au moins une donnée de caractéristique, le système de stockage cible est configuré avec des métadonnées de table, les métadonnées de table sont utilisées pour indiquer des informations de branche de stockage correspondant au système de stockage cible, les informations de branche de stockage comprennent une branche principale et au moins une branche expérimentale, la branche principale est utilisée pour monter un fichier de données qui a été utilisé pour un entraînement de modèle et dont le résultat d'entraînement répond à une exigence prédéfinie, la au moins une branche expérimentale est utilisée pour monter un fichier de données qui n'a pas été utilisé pour un entraînement de modèle, la branche principale et la au moins une branche expérimentale sont isolées l'une de l'autre, et la demande de stockage de fichier contient des informations de première branche cible ;
un module de détermination de branche (702), configuré pour déterminer, sur la base des métadonnées de table, une première branche expérimentale cible correspondant aux informations de première branche cible contenues dans la demande de stockage de fichier provenant de la au moins une branche expérimentale, et créer un premier instantané cible correspondant à la première branche expérimentale cible, dans lequel le premier instantané cible est utilisé pour indiquer un trajet de stockage cible du premier fichier de données cible dans le système de stockage cible ; et
un module de stockage de données (703), configuré pour stocker, selon le trajet de stockage cible indiqué par le premier instantané cible, le premier fichier de données cible dans un emplacement de stockage correspondant du système de stockage cible, dans lequel le premier fichier de données cible est isolé des fichiers de données correspondant aux autres branches expérimentales et à la branche principale du système de stockage cible ;
dans lequel l'appareil de stockage de données (700) comprend en outre un module de détermination de relation (704), et le module de détermination de relation (704) est configuré pour :
entraîner un modèle cible sur la base du premier fichier de données cible afin d'obtenir un résultat d'entraînement du premier fichier de données cible, et déterminer si le résultat d'entraînement du premier fichier de données cible répond aux exigences prédéfinies ; et
dans le cas où le résultat de l'entraînement du premier fichier de données cible répond à l'exigence prédéfinie, créer un deuxième instantané cible correspondant à la branche principale et établir une relation d'indication correspondante entre le deuxième instantané cible et le premier fichier de données cible ainsi qu'un fichier de données préexistant correspondant à la branche principale.

10. Dispositif électronique (900), comprenant un processeur (901), une mémoire (902) et un bus (903), dans lequel la mémoire (902) stocke des instructions lisibles par machine exécutables par le processeur (901), et lorsque le dispositif électronique (900) est en fonctionnement, le processeur (901) et la mémoire (902) communiquent entre eux par l'intermédiaire du bus (903) ; lorsque les instructions lisibles par machine sont exécutées par le processeur (901), le procédé de stockage de données selon l'une quelconque des revendications 1-8 est mis en œuvre.

11. Support de stockage lisible par ordinateur, dans lequel le support de stockage lisible par ordinateur stocke un programme informatique, et lorsque le programme informatique est exécuté par un processeur, le procédé de stockage de données selon l'une quelconque des revendications 1-8 est mis en œuvre.
